# EUROPÄISCHE PATENTANMELDUNG

(11) **EP 1 291 213 A2**
(43) Veröffentlichungstag der Anmeldung: **12.03.2003**
(21) Anmeldenummer: 02001827.1
(22) Anmeldetag: 26.01.2002
(51) Int. Cl.: B60J 7/00

(54) **Schiebedach mit Solarmodulen für Fahrzeuge**

(30) Priorität: 26.01.2001 DE 10103693; 19.02.2001 DE 10107999
(71) Anmelder: Müller, Hermann-Frank, 53177 Bonn - Bad Godesberg (DE)
(72) Erfinder: Müller, Hermann-Frank, 53177 Bonn - Bad Godesberg (DE)

(57) **Zusammenfassung**

Die Erfindung betrifft ein Schiebedach für Fahrzeuge mit einem lichtdurchlässigen Deckel (4) für eine Dachöffnung (2), wobei am Deckel (4) Solarmoduln (6) zur Energiegewinnung angebracht sind. Neben den insbesondere lichtdurchlässig ausgebildeten Solarmoduln (6) sind in deren unmittelbarer Nähe am Deckel (4) wenigstens ein ergänzend angebrachter Generator (12) spezieller Bauart, der unabhängig vom Fahrzeugmotor arbeitet und die für die Verbraucher benötigte Energie insbesondere in Spitzenverbrauchszeiten zur Verfügung stellt, sowie wenigstens ein zusätzlicher Energiespeicher (8) vorgesehen.

Der am Schiebedach (1) bzw. am Deckel (4) angebrachte ergänzende Generator (12) besteht im wesentlichen aus einer streifenförmigen Membran-Brennstoffzelle, in der bei Verbrennen einer Wasserstoffpatrone Energie gewonnen wird.

Solarmoduln (6) und Energiespeicher (8) (Akkumulator; Hochleistungskondensator) sind bevorzugt lichtdurchlässig und als Dünnschichtelemente ausgebildet.

## Beschreibung

Die Erfindung bezieht sich auf ein Schiebedach mit einem lichtdurchlässigen Deckel für eine Dachöffnung in einem Fahrzeug beliebiger Bauart gemäß der DE 199 11 811 C1, wobei der Deckel eine vorzugsweise als transparente Glasscheibe 12 ausgebildete Deckelscheibe umfasst, auf deren Unterseite ein Solarzellenverbund 14 mittels einer Klebefolie 16 aufgeklebt ist. Aus der DE 199 37 221 C1 ist ein Schiebedach bekannt, gemäß der ein Verschlusselement 14 aus einem Hauptsolargenerator 24 und einem Zusatzsolargenerator 34 gleicher Bauart besteht, wobei der Zusatzsolargenerator 34 unterhalb des Hauptsolargenerators 24 angeordnet und aus dieser Lage herausschiebbar ist, um die solarerzeugte Leistung zu erhöhen. Aus der DE 199 07 232 C1 ist ferner ein Schiebedach Stand der Technik, von dem aus die von den Solarzellen erzeugte elektrische Energie zum Betrieb eines Lüftermotors oder auch zur Fahrzeugbatterie als Energiespeicher geleitet werden kann (siehe Beschreibung in Spalte 2 Zeile 36 bis 40).

Es ist daher Aufgabe der Erfindung, die Erzeugung von elektrischer Energie für eine größere Anzahl an Verbrauchern zu verstärken, um nicht insbesondere in der Zeit des Spitzenverbrauchs auf die Fahrzeugbatterie angewiesen zu sein, wenn die mittels der Solarzellen erzeugte elektrische Energie nicht ausreicht.

Zur Lösung dieser Aufgabe werden nicht nur die Solarmoduln durchsichtig ausgebildet, so dass sie von zwei Seiten her Licht in elektrische Energie umwandeln können und als Nebeneffekt Licht durch die Dachöffnung in das Innere des Fahrzeuge gelangen kann, sondern wird auch mindestens ein ergänzender Generator spezieller Bauart vorgesehen, der im Gegensatz zu dem üblichen vom Fahrzeugmotor betätigten Generator am Schiebedach angebracht ist, der unabhängig vom Fahrzeugmotor arbeitet und so die Energieerzeugung insbesondere für eine größere Anzahl von Verbrauchern wie Klimaanlage, elektrische Bremse, elektrische Fahrzeug-Heizung etwa im Winter bei ausgeschaltetem Fahrzeugmotor, Auffüllen der Fahrzeugbatterie und dergleichen mehr auch dann sicherstellt, wenn die Erzeugung elektrischer Energie durch die Solarzellen etwa bei ungünstiger Witterung oder nachts geringer ist oder sogar ganz ausfällt. Auf diese Weise sinkt erfreulicherweise gleichfalls auch der Kraftstoffanteil während der Fahrt beispielsweise zum Betrieb einer Klimaanlage im Fahrzeug mit Hilfe der Fahrzeugbatterie spürbar. Durch wenigstens einen Energiespeicher, der in unmittelbarer Nähe der Solarmoduln am Schiebedach angeordnet ist, werden die energieführenden Leitungen zwischen Solarmoduln und Energiespeicher sowie zwischen dem zusätzlichen Generator am Schiebedach und dem Energiespeicher besonders kurz.

Einzelheiten des erfindungsgemäßen Schiebedaches in Ausbildung und Anordnung seiner Gesamtheit sowie in seinen Einzelteilen sind in den Unteransprüchen angegeben.

Die Erfindung wird nachstehend an Ausführungsbeispielen beschrieben und dargestellt. Hierbei zeigen:
- Figur 1: eine Draufsicht auf eine erste Schiebedach-Anordnung im Fahrzeug;
- Figur 2: einen Querschnitt einer zweiten Schiebedach-Anordnung im Fahrzeug;
- Figur 3: einen Querschicht durch die Deckelschichten, vergrößert, und
- Figur 4: einen Schnitt durch ein Fahrzeug mit einer Verkleidungssäule, in der ein Gehäuse zur Aufnahme einer Membran-Brennstoffzelle und mindestens einer Wasserstoffpatrone vorgesehen ist.

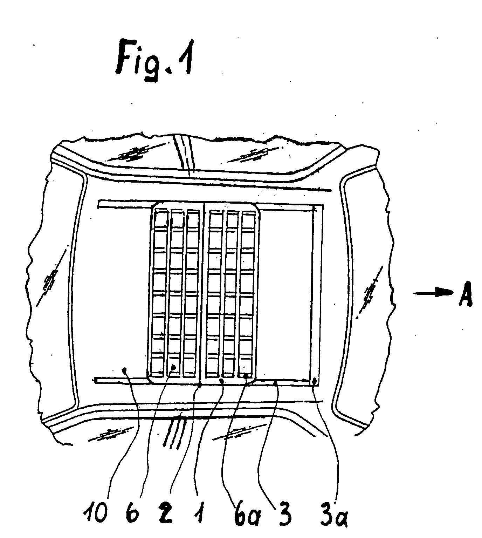

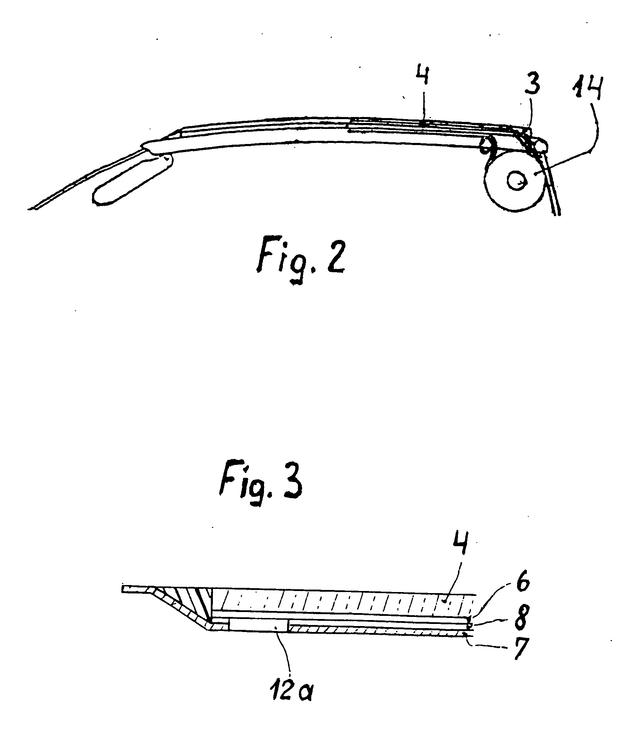

In einem Kraftfahrzeug gemäß Figur 1 ist ein Schiebedach 1 vorgesehen, das aus der Öffnung 2 manuell, elektrisch oder dergleichen etwa nach oben herausgehoben und in Führungen 3 nach vorn oder nach hinten oder je zur Hälfte nach vorn und nach hinten (siehe Figur 1) verschoben werden kann, so dass Luft in das Fahrzeuginnere gelangt. Die Führungen 3 enden in Fahrtrichtung A an einer Bremsleiste 3a, die in Fahrtrichtung A zum Fahrzeugdach hin abgeschrägt ist, um den Luftwiderstand während der Fahrt möglichst gering zu halten. Eine entsprechende Bremsleiste ist für die Führungen entgegen der Fahrtrichtung nicht unbedingt erforderlich, insbesondere, wenn diese Führungen einen Endanschlag für das entsprechende Schiebedachteil aufweisen. In diesem Schiebedach 1 sind Solarmoduln 6 mit z.B. monokristallinen oder polykristallinen Solarzellen insbesondere in Dünnschichtelementen-Form angebracht, die von einem lichtdurchlässigen Deckel 4 abgedeckt werden, wie er in Figur 3 dargestellt ist. Dieser Deckel 4 kann aus Glas, aus recyclebarem Polyurethan-Elastomer mit seinen sehr guten mechanischen Eigenschaften wie guter Verschleißfestigkeit und gutem Dämpfungs- und Rückstellverhalten, aus Polykarbonat oder aus einem anderen Material bestehen, das lichtdurchlässig ist und die erforderlichen Festigkeitswerte aufweist. Für das Herstellungsverfahren und für Montagezwecke ist es dabei vorteilhaft, wenn die Solarmoduln 6 mit den sie verbindenden (nicht dargestellten) Kontaktbahnen in dasselbe lichtdurchlässige Material des Deckels 4 eingebettet, z.B. vergossen, werden können, zumal auf diese Weise Undichtigkeiten automatisch vermieden werden und sie mit dem Deckel 4 so eine bauliche Einheit bilden können, auch wenn sie gegebenenfalls nur miteinander verklebt sind.

Wenn die Solarmoduln 6 und ihre Kontaktbahnen - in bekannter Weise - ebenfalls lichtdurchlässig sind, können sie entweder - wie vorstehend dargelegt - gemeinsam in den Deckel 4 z.B. aus Glas, Polyurethan-Elastomer oder dergleichen eingebettet (z.B. vergossen) oder die elektrischen Verbindungen (Kontaktbahnen aller Art , eventuell auch als Kabelbaum ausgebildet) zu den Energiespeichern 8 zwischen vor allem gleichfalls lichtdurchlässigen Abstandshaltern angebracht sein. Hier können ebenfalls bedarfsweise Energieverbraucher wie Lampen (LED und/oder PLED) vorgesehen werden, da die dann - falls erforderlich - ausgetauscht werden können. Die lichtdurchlässigen Solarmoduln 6 können dann nicht nur von zwei Seiten Licht aufnehmen und so ihre Leistung verbessern, sondern sie lassen Licht auch dann in das Fahrzeuginnere gelangen, wenn das Schiebedach nicht aus der Dachöffnung 2 herausgehoben ist. Es bleibt dem Fachmann überlassen, ob die Solarmoduln der Form des Fahrzeugdaches 10 angepaßt im Schiebedach 1 angeordnet sind oder - falls die Dicke des Fahrzeugdaches 10 es zulässt - in Lamellenform in festgelegtem oder einstellbarem Winkel zur Dachform, wobei die Einstellung des Winkels manuell oder automatisch - auch zeitlich - regelbar sein kann (vergleiche hierzu als Stand der Technik den Inhalt der De 199 07 333 C1), um die Leistung der Solarmoduln 6 dadurch zu verbessern, dass Licht von zwei Seiten zu ihnen gelangt, auch wenn das Schiebedach 1 aus der Öffnung 2 herausgehoben und vollständig auf das lichtundurchlässige Fahrzeugdach 10 geschoben wurde. Selbstverständlich ist auch in diesem Fall eine Teilung des Schiebedaches 1 möglich, von denen der eine Teil von der Öffnung 2 aus nach vorn, der andere Teil nach hinten geschoben wird (siehe hierzu ebenfalls die DE 199 07 333 C1).

Die Solarmoduln 6 sind im Schiebedach 1 z.B. reihenweise angeordnet. Zwischen den einzelnen Reihen bzw. auf ihnen. unter ihnen oder an ihren Rändern 6a befinden sich die zugeordneten Energiespeicher 8 (siehe Figuren 3 und 1), vorteilhafterweise als Dünnschichtelemente, die gleichfalls lichtdurchlässig sein können, wie dies aus der US 6,104,597 an sich bekannt ist. Der Fachmann wird festlegen, ob diese Energiespeicher 8 z.B. als Akkumulatoren oder als Hochleistungskondensatoren ausgebildet sein sollen.

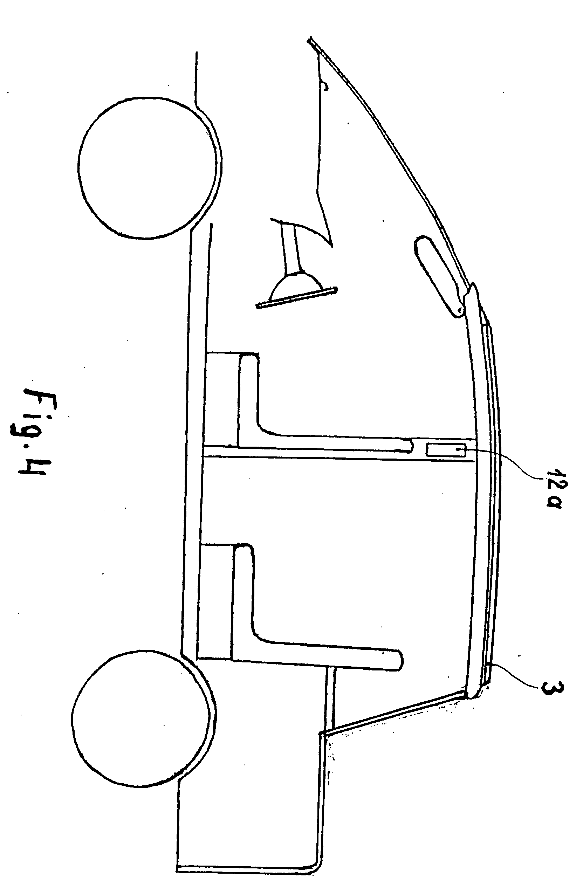

Neben den Energiespeichern 8 sind am Rande des Schiebedaches 1 streifenförmige Membran-Brennstoffzellen und Wasserstoffpatronen für eine ergänzende Energiegewinnung vorgesehen - vorzugsweise in einem eigenen Gehäuse 12a mit einschnappbarem Deckel, um die Wasserstoffpatronen nach ihrem Einsatz leicht ersetzen zu können. Es ist dabei von Vorteil, wenn in dem Gehäuse 12a mehrere Wasserstoffpatronen Platz finden, die - ähnlich wie bei einem Mehrschussgewehr - nacheinander gesteuert zur Membran-Brennstoffzelle gelangen. Diese Anordnung ist insbesondere wegen des kurzen Leitungsweges zu den Energiespeichern 8 der Solarmoduln 6 günstig, die damit auch die auf diese zusätzliche Weise gewonnene elektrische Energie - soweit erforderlich - speichern können. Die Gehäuse 12a für eine streifenförmige Membran-Brennstoffzelle mit zugeordneten Wasserstoffpatronen 12 können jedoch außerdem auch in Hohlräumen der Verkleidung des Fahrzeugs wie z.B. in den A-, B- und C-Säulen angebracht sein (siehe Figur 4). Zwar sind in einem solchen Fall die Leitungswege zu den Speicherelementen 8 am Schiebedach 1 im Bereich der Solarmoduln 6 länger, doch ist der Gewinn an Energie beträchtlich.

Weitere an sich bekannte Möglichkeiten, zusätzliche Energie zu gewinnen und sie in elektrische Energie zu wandeln, sind neben der Bremsenergie die Stoßdämpfer-Energie (siehe DE 196 47 031 A1), die Schwingungsenergie (siehe DE 195 20 521 A1) und die Schall-Energie (siehe DE 196 02 203 A1). Die so gewonnene Energie kann einzeln oder gesammelt ebenfalls zu den Energiespeichern 8 am Schiebedach 1 geleitet werden, von wo sie den verschiedenen Verbrauchern zugeführt wird. Da das Schiebedach verschieblich oder - wie weiter unten noch dargelegt wird - sogar teilweise oder vollständig vom Fahrzeugdach 10 entfernt werden kann, sind die aus den einzelnen Fahrzeugteilen führenden elektrischen Leitungen entsprechend vorschriftsmäßig trennbar anzuordnen, bevor eine Verbindung zu den Energiespeichern 8 des Schiebedaches 1 und/oder eine gegebenenfalls temporäre Verbindung mit dem vom Fahrzeugmotor abhängigen Energiespeicher vorgenommen wird.

Es besteht die Möglichkeit, dass die Solarmoduln 6 selbst den Deckel 4 für die Dachöffnung 2 bilden, wobei sie nach außen eine an sich bekannte lichtdurchlässige und schmutzabweisende Schicht gegen Umwelteinflüsse wie Feuchtigkeit und Temperatur aufweisen (siehe Prospekt der Firma NOWOFOL & Kunststoffprodukte GmbH & Co KG in 83313 Siegsdorf/Obb.). Um jedoch zu verhindern, dass diese Solarmoduln 6 außerhalb der Betriebszeit von außen beschädigt werden, sollte ein verschiebbarer oder in die Dachöffnung 2 einsetzbarer (nicht dargestellter) Schutzdeckel vorgesehen werden, der vom Fahrzeuginnern aus insbesondere mechanisch gegen ein Entfernen gesichert ist. Die Auswahl bei der konstruktiven Ausbildung einer derartigen Sicherung bleibt dabei dem Fachmann überlassen.

Sollte ein Lichteinfall durch das Schiebedach 1 vermieden werden, kann dies durch einen vorhangartigen (nicht dargestellten) "Schiebehimmel" erfolgen, der natürlich auch als manuell oder z.B. elektrisch betätigbare ein- oder mehrteilige feste Abdeckung ausgebildet sein kann.

Um die im Schiebedach 1 von Solarmoduln 6 und Membran-Brennstoffzellen mit Wasserstoffpatronen 12 erzeugte und in den Speicherelementen 8 gespeicherte elektrische Energie bei Bedarf auch außerhalb des Fahrzeugs in mehr oder weniger großer Entfernung verwenden zu können, weist der Deckel 4 des Schiebedaches 1 oder dieses selbst eine trennbare Verrastung auf, wie sie z.B. aus der DE 40 03 399 C2 bei einer Sonnenblende an sich bekannt ist, wobei die spezielle Ausbildung dieser Verrastung von den jeweiligen konstruktiven Gegebenheiten und dem gewünschten Design abhängt.

Schließlich besteht auch die bauliche Möglichkeit, das Schiebedach rolloartig auszubilden (siehe Figur 2) und im Fahrzeug auf einer Walze 14 so anzubringen, wie dies in mehreren konstruktiven Varianten aus der DE 198 50 296 A1 herleitbar ist. Um das Schiebedach 1 auch in diesem Fall aus dem Fahrzeug entfernen zu können, müssen selbstverständlich die Betätigungsverbindungen für das "Rollo" vorher in an sich bekannter Weise getrennt werden.

Verbraucher für die im Schiebedach 1 gewonnene bzw. gespeicherte elektrische Energie, die z.B. über einen (nicht dargestellten) Steckkontakt am Schiebedach 1 angeschlossen werden können, sind z.B. eine Klimaanlage im Fahrzeug, Elektromotoren für einen Ventilator, das Heben und Senken der Fensterscheiben, das Betätigen eines "Rollos" beliebiger Art und/oder des Schiebedaches 1, das Verstellen von Außen- und Innenspiegel und dergleichen mehr. Selbstverständlich kann von dieser Energie auch die Fahrzeugbatterie aufgeladen sowie Scheibenheizungen, Kühlbox und dergleichen betätigt werden.

Das vorstehend beschriebene Schiebedach 1 läßt sich außer bei Fahrzeugen üblicher Bauart wie PKW, LKW, Bus auch bei Eisenbahnen, Schiffen und bei Elektrofahrzeugen aller Art wie z.B. bei einem E-Z-Go Golf-Elektromobil verwenden. Es kann dabei dahingestellt bleiben, ob in diesen Fällen ein Entfernen des Schiebedaches 1 aus der vorgesehenen Einbaulage an einen räumlich anderen Ort sinnvoll ist oder besser darauf aus Kostengründen verzichtet wird.

## Patentansprüche

1. Schiebedach für Fahrzeuge mit einem lichtdurchlässigen Deckel für eine Dachöffnung in einem Fahrzeug, wobei am Deckel Solarmoduln zur Energiegewinnung angebracht sind,
**dadurch gekennzeichnet,**
**dass** die Solarmoduln (6) lichtdurchlässig ausgebildet sind,
**dass** wenigstens ein ergänzender Generator (12) spezieller Bauart am Schiebedach 1 vorgesehen ist, der unabhängig vom Fahrzeugmotor arbeitet, und
**dass** wenigstens ein zusätzlicher Energiespeicher (8) in unmittelbarer Nähe der Solarmoduln (6) angebracht ist.

2. Schiebedach nach Anspruch 1,
**dadurch gekennzeichnet,**
**dass** der Generator (12) eine mit Wasserstoff betriebene streifenförmige Membran-Brennstoffzelle ist.

3. Schiebedach nach Anspruch 2,
**dadurch gekennzeichnet,**
**dass** der Generator in einem Gehäuse (12a) mit Deckel und Schnappverschluß angeordnet ist.

4. Schiebedach nach wenigstens einem der Ansprüche 1 bis 3,
**dadurch gekennzeichnet,**
**dass** mindestens ein energiespeicherndes Dünnschichtelement als Batterie beliebiger Art (8) am Trägermaterial (7) des Dachöffnungs-Deckels (4) und/oder am Rahmenteil (6a) der Solarmoduln (6) vorgesehen ist.

5. Schiebedach nach Anspruch 4,
**dadurch gekennzeichnet,**
**dass** das Dünnschichtelement (8) lichtdurchlässig ist.

6. Schiebedach nach wenigstens einem der Ansprüche 1 bis 5,
**dadurch gekennzeichnet,**
**dass** mindestens eine streifenförmige Membran-Brennstoffzelle (12) mit mindestens einer zugeordneten Wasserstoffpatrone am Trägermaterial (7) des Dachöffnungs-Deckels (4) und/oder am Rahmenteil (6a) der Solarmoduln (6) vorgesehen ist, die elektrisch leitend mit einem Energiespeicher (8) in unmittelbarer Nähe der Solarmoduln (6) verbunden ist.

7. Schiebedach nach wenigstens einem der Ansprüche 1 bis 6,
**dadurch gekennzeichnet.**
**dass** weitere Membran-Brennstoffzellen (12) mit je mindestens einer zugeordneten Wasserstoffpatrone in Hohlräumen der Verkleidung angebracht sind.

8. Schiebedach nach wenigstens einem der Ansprüche 1 bis 7,
**dadurch gekennzeichnet.**
**dass** die Solarmoduln (6) mit den sie verbindenden Kontaktbahnen in Glas eingebettet sind.

9. Schiebedach nach wenigstens einem der Ansprüche 1 bis 8,
**dadurch gekennzeichnet,**
**dass** der Deckel (4) für die Dachöffnung (2) aus Polyurethan-Elastomer besteht.

10. Schiebedach nach Anspruch 9,
**dadurch gekennzeichnet,**
**dass** die Solarmoduln (6) mit den sie verbindenden Kontaktbahnen in Polyurethan-Elastomer eingebettet sind.

11. Schiebedach nach wenigstens einem der Ansprüche 1 bis 10,
**dadurch gekennzeichnet,**
**dass** die Solarmoduln (6) selbst den Deckel (4) für die Dachöffnung (2) des Schiebedaches (1) bilden und eine lichtdurchlässige sowie feuchtigkeits- und schmutzabweisende Schutzschicht gegen Umwelteinflüsse aufweisen.

12. Schiebedach nach wenigstens einem der Ansprüche 1 bis 11.
**dadurch gekennzeichnet,**
**dass** es als Rollo ausgebildet ist.

13. Schiebedach nach wenigstens einem der Ansprüche 1 bis 12,
**dadurch gekennzeichnet,**
**dass** zum Abdecken der Solarmoduln (6) gegen Beschädigungen von außen außerhalb der Betriebszeit ein in die Dachöffnung (2) einsetzbarer oder verschiebbarer Schutzdeckel vorgesehen ist, der vom Fahrzeuginnern aus gegen Entnahme gesichert ist.

14. Schiebedach nach wenigstens einem der Ansprüche 1 bis 13,
**dadurch gekennzeichnet,**
**dass** der Deckel (4) des Schiebedaches (1) für eine Verwendung außerhalb des Fahrzeugs eine trennbare Verrastung aufweist.

15. Schiebedach nach wenigstens einem der Ansprüche 1 bis 13,
**dadurch gekennzeichnet,**
**dass** das gesamte Schiebedach (1) für eine Verwendung außerhalb des Fahrzeugs eine trennbare Verrastung aufweist.
